# EUROPEAN PATENT SPECIFICATION

(11) **EP 3 855 219 B1**
(45) Date of publication and mention of the grant of the patent: **18.09.2024**
(21) Application number: 20152933.6
(22) Date of filing: 21.01.2020
(51) Int. Cl.: G02B 3/00, G02B 5/02, G02B 27/09, G01S 7/481, G01S 17/08

(54) **DIFFUSER DEVICE**
DIFFUSORVORRICHTUNG
DISPOSITIF DE DIFFUSEUR

(43) Date of publication of application: 28.07.2021
(73) Proprietor: Focuslight Technologies Inc., Xi'an, Shaanxi 710077 (CN)
(72) Inventor: Dr. Krasnaberski, Aliaksei, 44229 Dortmund (DE); Hauschild, Dirk, 41539 Dormagen (DE)
(74) Representative: Schäperklaus, Jochen

(56) References cited:
- EP-B1- 1 984 787
- WO-A2-99/50596
- DE-A1- 102010 053 781
- DE-A1- 102013 102 863
- US-A1- 2006 291 020
- US-A1- 2008 084 612
- US-A1- 2019 187 341
- US-B1- 6 259 561

## Description

The present invention concerns a diffuser device according to the preamble of claim 1, a distance measuring device according to the preamble of claim 13 and a LIDAR device according to the preamble of claim 14.

The previous use of diffuser devices based on wet-chemically etched or lithographically manufactured diffusers has a high proportion of scattered or diffracted light due to the small structure sizes, which reduces the optical efficiency and limits the maximum achievable divergence angle and the uniformity of the intensity distribution. The resulting limited field of view and reduced resolution of these sensors do not allow sufficient functionality in the surrounding surveying of objects such as cars, robots, drones and the like. The necessary increase in the number of sensors is neither technically nor economically advantageous. In addition, when using the typical diffusers, it cannot be ensured that a diffraction of 0th order is generated with high intensity, which limits the laser safety of this optical solution and can lead to the expiration of the operating permit.

A diffuser device is known from US 2019/0187341 A1, for example. The designs described therein comprise a first lens array with a plurality of rotationally symmetric lenses on the entrance surface of a transparent substrate and a second lens array with a plurality of rotationally symmetric lenses on the opposite exit surface of the substrate. The light to be expanded can pass through the two lens arrays one after the other during operation of the diffuser device.

A device of the type mentioned above is known from EP 1 984 787 B1. The device is part of an illumination system for a microlithographic projection exposure apparatus. The device comprises three transparent substrates, which are spaced apart from one another. The first substrate comprises a first lens array having a plurality of cylindrical lenses and the second substrate comprises a second lens array having a plurality of cylindrical lenses. The lenses of the first lens array have cylinder axes extending in a first direction and the lenses of the second lens array have cylinder axes extending in a second direction perpendicular to the first direction.

A device for the homogenization of laser radiation is known from DE 10 2013 102 863 A1. The device described therein comprises two transparent substrates, which are spaced apart from one another. The first substrate comprises a first lens array having a plurality of cylindrical lenses and the second substrate comprises a second lens array having a plurality of cylindrical lenses. The lenses of the first lens array and the lenses of the second lens array have cylinder axes extending in the same direction. The second substrate is movable relative to the first substrate.

The DE 10 2010 053 781 A1 discloses devices for converting laser radiation into laser radiation with an M profile. One of the devices described therein comprises three transparent substrates, which are spaced apart from one another. Each of the substrates comprises a lens array having a plurality of cylindrical lenses. The lenses of the lens arrays have cylinder axes extending in the same direction.

A device for the homogenization of laser radiation is known from US 2008/0084612 A1. The device described therein comprises three transparent substrates, which are spaced apart from one another. Each of the substrates comprises a lens array having a plurality of cylindrical lenses. The lenses of the lens arrays have cylinder axes extending in the same direction. The second and the third substrate are movable relative to each other.

The WO 99/50596 A2 discloses illumination devices for generating non-symmetric light beams used for signaling lights or warning lights for vehicles. One of the devices described therein comprises two transparent substrates, which are spaced apart from one another. The first substrate has a Fresnel lens with spherical Fresnel structures. The second substrate has two Fresnel lenses with cylindrical Fresnel structures. Thereby, Fresnel structures perpendicular to each other are arranged on the front side and the back side of the second substrate.

The problem underlying this invention is the creation of a diffuser device of the type mentioned above which can effectively expand light passing through it into a wide angular range. A distance measuring device with such a diffuser device and a LIDAR device with such a diffuser device shall be specified.

This is achieved by means of a diffuser device of the type mentioned at the beginning with the characteristic features of claim 1, a device for measuring the distance of the type mentioned at the beginning with the characteristic features of claim 13 and a LIDAR device of the type mentioned at the beginning with the characteristic features of claim 14. The subclaims concern preferred forms of the invention.

Claim 1 provides that the lenses of the first lens array and/or the lenses of the second lens array are aspherical, so that they deviate from the shape of a circular cylinder, wherein the lenses of the second lens array have a radius such that the light passing through the second lens array is widened in the first direction into an angular range of more than 100°.

By forming the two lens arrays on different substrates, it can be ensured that the light distribution generated by the diffuser device is largely distortion-free. The substrates may be glass or plastic, for example, or may comprise glass or plastic. For example, the type and size of any distortion that may occur can be influenced by appropriately selecting the distance between the two substrates. Alternatively or additionally the type and size of distortion that may occur can be influenced by appropriately selecting the arrangement of the system rather than by appropriately selecting the distance between the two substrates. For example, to minimize pincushion distortion, a small angle diffuser substrate first followed by large angle diffuser substrate could be used. For example, to obtain a pattern with Barrel distortion, a large angle diffuser single side structured substrate first followed by small angle double side structured substrate could be used.

Due to the cylindrical lens design, the expansion can be optimized separately for two different directions.

It may be provided that the lenses of the first lens array are arranged side by side in the second direction and the lenses of the second lens array are arranged side by side in the first direction. The crossed arrangement of the cylindrical lenses of the first and second arrays allows the expansion for two perpendicular directions to be optimized separately. For example, a different expansion can be selected for a horizontal direction than in the vertical direction perpendicular to it.

It is possible that the first lens array is located on the entrance surface or on the exit surface of the first substrate or the second substrate. Alternatively or additionally, it may be provided that the second lens array is arranged on the entrance surface or on the exit surface of the first substrate or the second substrate.

It is possible that the diffuser device comprises a third lens array, and/or a fourth lens array, which is or are also arranged on the first substrate and/or the second substrate. For example, one or both substrates can be provided with two lens arrays. The increase in the number of lens arrays increases the design possibilities with regard to the light distribution to be generated.

It may be provided that the diffuser device comprises a lens arranged on the first substrate and/or on the second substrate, in particular on its exit surface, or arranged on a separate third substrate. The light passing through the diffuser device can be additionally widened by a lens of this type, for example a diffusing lens. As an alternative to an additional lens, an additional lens array with a corresponding function can also be considered.

It may be provided that the diffuser device comprises a collimator lens or a collimator lens array in the front of the diffuser device. The collimator lens can also be integrated or combined into the first or the second substrate.

It is possible that the lenses of the first lens array and/or the lenses of the second lens array are refractive or diffractive or holographic lenses. Alternatively, the lenses can also be gradient index lenses.

It may be provided that the lenses of the first lens array and/or the lenses of the second lens array have a positive or negative refractive power. It is also possible to provide the lenses of one of the lens arrays with a positive refractive power and the lenses of another of the lens arrays with a negative refractive power.

It is possible that the lenses of the first lens array and/or the lenses of the second lens array are arranged regularly or irregularly. For example, the lenses of one of the lens arrays may have mutually different dimensions or radii.

It may be provided that the lenses of the first lens array and/or the lenses of the second lens array are asymmetrically shaped, in particular in such a way that between the lenses there is partly a step-like offset. Lenses with an asymmetric shape can influence the light passing through the diffusion device so that the far field profile becomes asymmetrical.

Due to the asymmetry of the lenses, the left edges of the lenses have a different design than the right edges of the lenses, so that a step-like offset can occur at least partially between adjacent lenses. In order to reduce this effect, it is possible to provide that the lenses of a lens array on the entrance surface of one of the substrates are asymmetrically shaped, wherein prisms or one common prism are arranged on the exit surface of this substrate. In this case the lenses can have the same SAG values at the left and right lens aperture positions, which ensures a continuous transition from each lens to the adjacent lens. It should be noted that SAG values are also called Sagitta values or Z values of the lens surface. Such a measure can largely prevent the step-like offset between adjacent lenses. The production of the lens array can be simplified by largely avoiding the step-like offset.

Alternatively, it may be provided that the lenses of a lens array on the entrance surface of one of the substrates are asymmetrically shaped wherein one common prism is arranged on the entrance surface of this substrate. In this case there is no offset between adjacent lenses.

Alternatively, it may be provided that the lenses of a lens array on the entrance surface of one of the substrates are symmetrically shaped, wherein the lenses of a lens array on the exit surface of this substrate are asymmetrically shaped. In this case it is possible to obtain an total efficiency of about 77% without preliminary collimation and with a minimum step-like offset between the lenses on the exit surface. The SAG values in this case can be different.

It may be provided that the center distances of the lenses of the first lens array from the center distances of the lenses of the second lens array are different, in particular wherein the center distances of the lenses of the first lens array are larger than the center distances of the lenses of the second lens array. This allows the center distances or the dimensions, especially the widths, of the lenses to be optimized specifically for the two different directions of light distribution.

It is possible that the lenses of the first lens array have such a radius that the light passing through the first lens array is widened in the second direction into an angular range of more than 5°, in particular into an angular range of more than 10°, preferably into an angular range of more than 15°, for example into an angular range of about 20°, and/or in that the lenses of the second lens array have a radius such that the light passing through the second lens array is widened in the first direction into an angular range of about 120°. For example, an angular range of 120° is suitable for the horizontal direction of a LIDAR device of a motor vehicle, whereas an angular range of approximately 20° is suitable for the vertical direction of a LIDAR device of a motor vehicle.

It is possible that the lenses of the first lens array have a radius of less than 1.28 mm, in particular a radius of less than 0.64 mm, preferably a radius of less than 0.44 mm, for example a radius of about 0.32 mm, and/or in that the lenses of the second lens array have a radius of less than 0.18 mm, in particular a radius of less than 0.12 mm, preferably a radius of less than 0.09 mm, for example a radius of about 0,033 mm. For example, the first lens array can be made of fused silica glass. The lenses of the first lens array can have a center distance or pitch of 260 µm and a conical constant of -0.7. Additionally, the second lens array can be made of S-TIH53 glass. The lenses of the second lens array can have a center distance or pitch of 200 µm and a conical constant of -0.89.

Preferably the radius of the lenses of the first lens array is larger by a factor between 2 and 20 than the radius of the lenses of the second lens array.

In particular, it may be provided that the distance between the first lens array and the second lens array is unequal to the focal length of the lenses of the second lens array or unequal to the focal length of the lenses of the second lens array in the direction of propagation of the light.

For the spatial measurement and positioning of stationary and mobile objects, the use of laser light sources enables a combined temporally and spatially resolved measurement. The combination of a laser light source, a diffuser device and a 1D or 2D detector unit can simultaneously evaluate a defined field of view. The use of a diffuser device serves to adapt the illumination field to the field of view of the detector unit. The temporal resolution is determined by the illumination duration and the frequency of the measurement repetitions. The spatial resolution is determined by the illumination of a contiguous surface of a sphere segment, whose equidistant distance to the laser light source and to the detector unit allows a temporally resolved spatial distance measurement. A diffuser device has the task of transforming the incident laser beam onto the angular space of a sphere segment of the illumination field or onto the plane surface or of creating such an angular or space light intensity distribution that corrects the aberrations of the detector system and thus illuminating the field of view of the detector unit. The variety of possible laser light sources such as a diode, a VCSEL, a DPSSL, a fiber laser or an SLD results in a dependence of the illumination quality and its applicability on the beam quality M² and the beam parameter product BPP of the respective source. In order to be able to use arbitrary sources, the diffuser device can be designed so that the exit angle of the diffuser device exceeds the entrance angle formed by the divergence of the laser light source and a possible tilting angle of the optical axis of the laser light source by a multiple. In order to achieve a defined distribution of the illumination power over the angular space, refractive surfaces of the diffuser device can be selected with a defined deviation from a spherical or circular cylindrical segment, resulting in a uniform power distribution over the entire angular space. The combination of several refractive surfaces of this type with different apertures or different center distances of the refractive surfaces, respectively, additionally allows a superposition of the refractive deflection of the light with a diffractive pattern structure resulting from the superposition of plane waves with different tilting angles to the different refractive lens segments. The resulting light distribution correlates with the wavelength of the light and is spatially and temporally stable. In addition, it has a defined, very low modulation structure which, in combination with the detector unit and a calibration procedure, leads to an additional improvement in the detection stability and resolution of the unit.

The diffuser device can consist of one or more components that either simultaneously span the angular space or separately generate the angles in the horizontal and vertical directions.

The combination of refractive lens arrays with different apertures or different center distances of the lenses, respectively offers for the first time the possibility to generate large illumination angles and at the same time to constructively superimpose the diffractive power component into the homogeneous illumination and detection quality. In particular, the additional use of optical glasses with a refractive index >1.7 opens up the possibility of realizing divergence angles >100°. The use of aspherical surfaces, especially surfaces deviating from a circular cylindrical shape, additionally offers the possibility of deflecting more light at large angles, whereby the detection unit enables almost the same detection quality and resolution in all spatial directions.

Claim 13 provides that the diffuser device is a diffuser device in accordance with the invention.

Claim 14 provides that the diffuser device is a diffuser device in accordance with the invention.

Simultaneous spatial distance measurement (TOF LIDAR) with laser light is an essential component of future autonomous mobility. The use of quasi-simultaneous scanning solutions is classified by all users only as an interim solution and does not offer sufficient spatial and temporal resolution. The optical or mechanical deflection of lines has the additional disadvantage that the line detectors can only be used to a limited extent and that the superimposition of light lines and the imaging onto the line sensor is only possible in a limited solid angle with limited resolution. The proposed diffuser devices can be combined with any laser light source to cover automotive, transportation, consumer ID and machine vision applications.

Further features and advantages of this invention are clearly illustrated by the following description of preferred embodiments of the invention with reference to the enclosed illustrations. Show in:
- Fig. 1: a side view of a diffuser device;
- Fig. 2: a top view of the diffuser device according to Fig. 1;
- Fig. 3: a far field distribution of light which has passed through the diffuser device according to Fig. 1;
- Fig. 4: a side view of a first embodiment of a diffuser device according to the invention;
- Fig. 5: a top view of the diffuser device according to Fig. 4;
- Fig. 6: a far field distribution of light which has passed through the diffuser device according to Fig. 4;
- Fig. 7: a side view of a second embodiment of a diffuser device according to the invention;
- Fig. 8: a top view of the diffuser device according to Fig. 7;
- Fig. 9: a far field distribution of light which has passed through the diffuser device according to Fig. 7;
- Fig. 10: a side view of a third embodiment of a diffuser device according to the invention;
- Fig. 11: a top view of the diffuser device according to Fig. 10;
- Fig. 12: a side view of a fourth embodiment of a diffuser device according to the invention;
- Fig. 13: a top view of the diffuser device according to Fig. 12
- Fig. 14: a side view of a substrate of a fifth embodiment of a diffuser device according to the invention;
- Fig. 15: a side view of a substrate of a sixth embodiment of a diffuser device according to the invention;
- Fig. 16: a side view of a substrate of a seventh embodiment of a diffuser device according to the invention;
- Fig. 17: a side view of a substrate of a eighth embodiment of a diffuser device according to the invention.

In the figures the same or functionally the same parts are provided with the same reference signs. In some of the figures cartesian coordinate systems are drawn for better orientation.

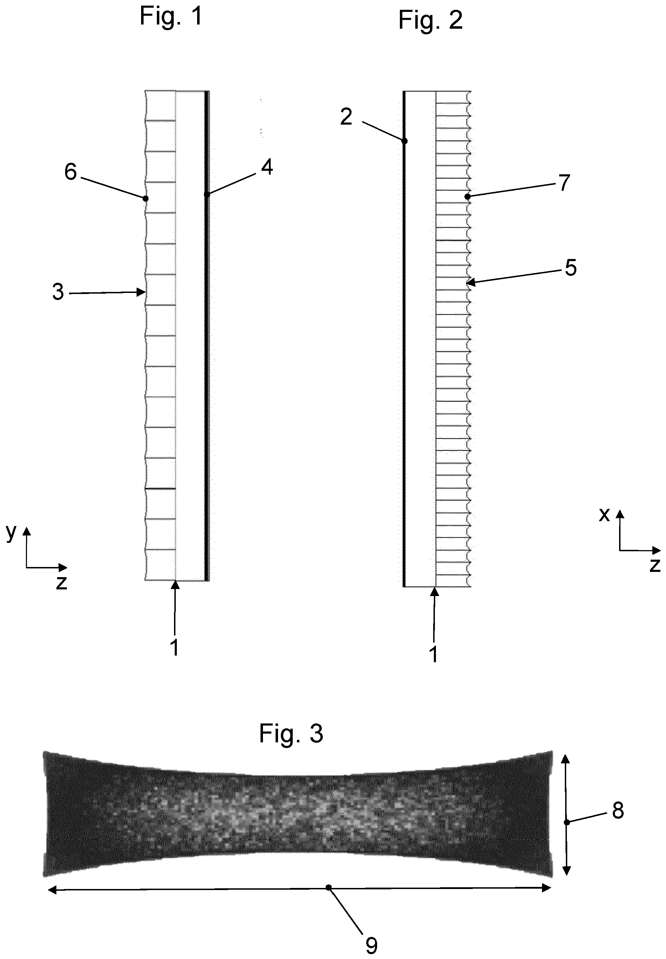

The embodiment of a diffuser device shown in Fig. 1 and Fig. 2 comprises a transparent substrate 1 having a first lens array 3 on an entrance face 2 and a second lens array 5 on an exit face 4 opposite the entrance face 2. The lenses 6, 7 of the lens arrays 3, 5 are each designed as cylindrical lenses.

The lenses 6 of the first lens array having 3 cylindrical axes extending in a first direction x, the lenses 7 of the second lens array having 5 cylindrical axes extending in a second direction y perpendicular to the first direction x. The lenses 6 of the first lens array 3 are arranged next to each other in the second direction y (see Fig. 1) and the lenses 7 of the second lens array 5 are arranged next to each other in the first direction x (see Fig. 2).

The entrance surface 2 and the exit surface 4 are opposite to each other in a third direction z, which is perpendicular to the first and second directions x, y. In the position of use of the diffuser device, light passes through the substrate 1 in the z-direction.

The lenses 6 of the first lens array 3 and the lenses 7 of the second lens array 5 are concave cylindrical lenses. It is possible to use convex lenses instead of concave lenses for the first and/or second lens array 3, 5.

The lenses 6 of the first lens array 3 and the lenses 7 of the second lens array 5 are aspherical, so that they deviate from the shape of a circular cylinder.

The lenses 6 of the first lens array 3 have such a radius that the light passing through the first lens array 3 is widened in the second direction into a first angular range 8 of about 20°, for example (see the far field in Fig. 3).

Furthermore, the lenses 7 of the second lens array 5 have such a radius that the light passing through the second lens array 5 is widened in the first direction into an angular range 9 of about 120°, for example (see the far field in Fig. 3). For example, the radius could be about 0.033 mm. In addition, the conical constant, which is a measure of the size of the aspheric formation of the lenses, can have a size of 0.89.

Such a light distribution can be advantageously used for a LIDAR device where the angular range 9 of about 120° can correspond to the horizontal direction of the light distribution and the angular range 8 of about 20° can correspond to the vertical direction of the light distribution.

In particular, it may be provided that the distance between the first lens array 3 and the second lens array 5 in the z direction is not equal to the focal length of the lenses 7 of the second lens array 5.

Furthermore, the width of the lenses 6 of the first lens array 3 in the y-direction is greater than the width of the lenses 7 of the second lens array 5 in the x-direction. Accordingly, the center distance of the lenses 6 of the first lens arrays 3 in the y-direction is greater than the center distance of the lenses 7 of the second lens array 5 in the x-direction.

The lenses 6, 7 of the first and second lens arrays 3, 5 are shown in the figures as refractive lenses. There is, however, a possibility that other optical elements, such as diffractive elements, reflective elements or holographic elements, may be used as cylindrical lenses instead of refractive lenses. Alternatively, the lenses can also be gradient index lenses.

The diffuser device can be supplied with light from a laser light source or an LED light source. Examples of this are multi-mode laser light sources or small mode laser light sources with M² greater than about 3. In the case of a single-mode laser light source, no continuous distribution occurs in the far field, but a large number of point intensity distributions.

Fig. 3 shows that the far field of the light emitted by the diffuser device exhibits comparatively strong cushion distortion.

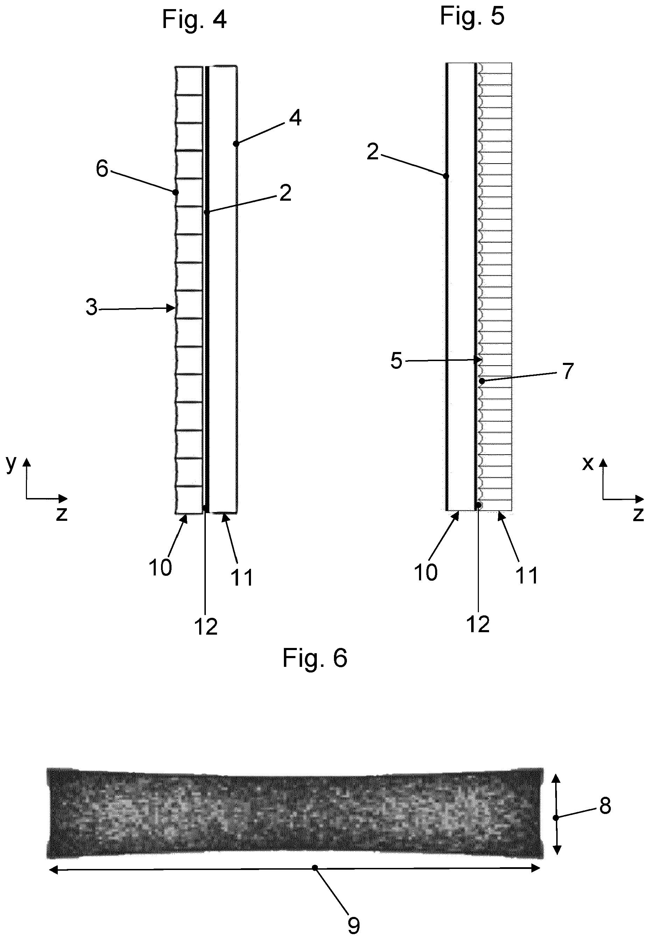

In order to produce less distortion in the far field, two separate substrates 10, 11 are provided for the embodiment according to Fig. 4 and Fig. 5, which are separated from each other by an air gap 12. The air gap 12 separates the substrates 10, 11 in z-direction from each other.

In the embodiment according to Fig. 4, a first lens array 3 is arranged on the entrance surface 2 of the first substrate 10, which has lenses 6 designed as cylindrical lenses. Furthermore, a second lens array 5 is arranged on the entrance surface 2 of the second substrate 11 and has lenses 7 designed as cylindrical lenses.

The lenses 6, 7 of the embodiment according to Fig. 4can be designed like the lenses 6, 7 of the embodiment according to Fig. 1.

In particular, the lenses 6 of the first lens array have 3 cylindrical axes extending in the first direction x, wherein the lenses 7 of the second lens array have 5 cylindrical axes extending in the second direction y. The lenses 6 of the first lens array 3 are arranged next to each other in the second direction y (see Fig. 4) and the lenses 7 of the second lens array 5 are arranged next to each other in the first direction x (see Fig. 5).

Furthermore, the lenses 6 of the first lens array 3 have such a radius that the light passing through the first lens array 3 is expanded in the second direction y into a angular range 8 of about 20°, for example (see the far field in Fig. 6).

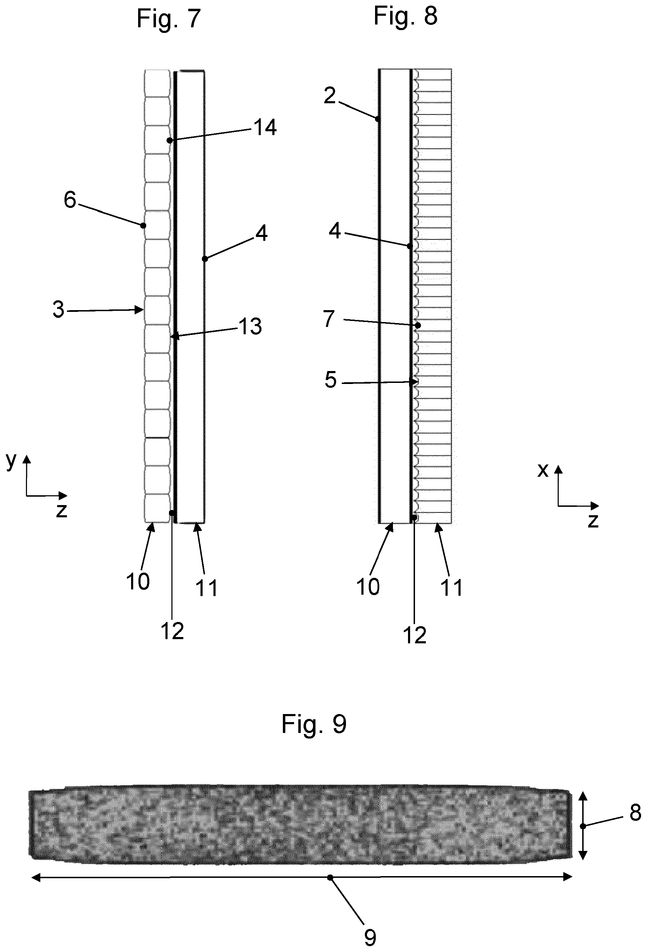

Furthermore, the lenses 7 of the second lens array 5 have such a radius that the light passing through the second lens array 5 is expanded in the first direction x into an angular range 9 of about 120°, for example (see the far field in Fig. 9). For example, the radius could be about 0,033 mm. In addition, the conical constant, which is a measure of the size of the aspheric formation of the lenses, can have a size of 0.89.

Fig. 6 shows that the far field of the light emitted by the diffusion device according to Fig. 4 and Fig. 5 shows only a comparatively low cushion distortion, whereby the reduction of the cushion distortion is also caused by the use of two substrates for the lens arrays 3, 5.

In contrast to the embodiment according to Fig. 4, the embodiment according to Fig. 7 and Fig. 8 provides, in addition to the two lens arrays 3, 5, a third lens array 13, which is arranged on the exit surface 4 of the first substrate 10. The third lens array 13, like the first lens array 3, has 14 convex lenses designed as cylindrical lenses.

It should be noted at this point that all lens arrays 3, 5, 13 can have either concave or convex lenses 6, 7, 14.

Fig. 9 shows that the far field of the light emanating from the diffuser device according to Fig. 7 and Fig. 8 shows only a comparatively low ton distortion. In particular, the type and size of distortion can be influenced by selecting the appropriate distance between the substrates 10, 11.

It is possible that in addition to the first and third lens arrays 3, 13 on the first substrate 10, two lens arrays may also be provided on the second substrate 11, namely the second lens array 5 shown on the entrance surface 2 and a fourth lens array not shown on the exit surface 4 of the second substrate 11. Alternatively, two lens arrays may also be provided on the second substrate 11 and only one lens array on the first substrate 10.

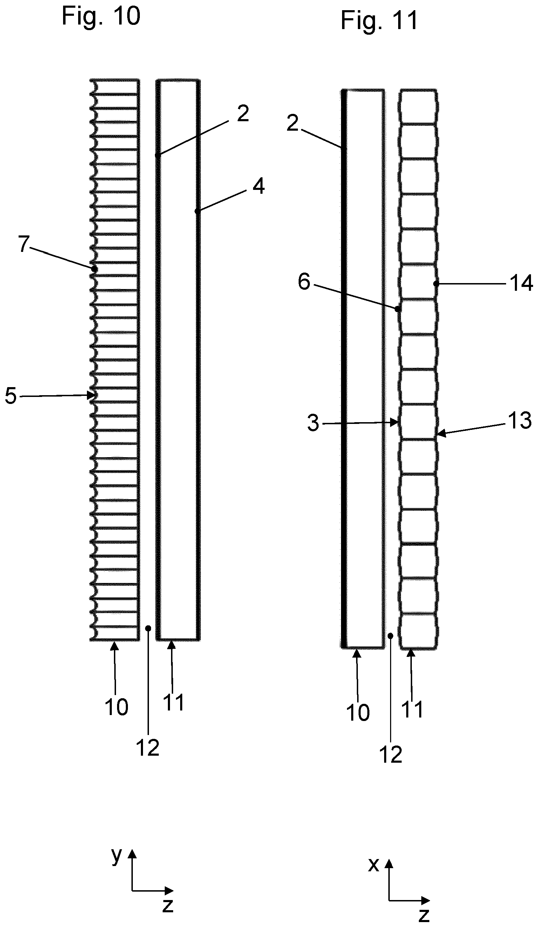

The third embodiment according to Fig. 10 and Fig. 11 is similar to the second embodiment according to Fig. 7 and Fig. 8. However, in the third embodiment, the second lens array 5 with lenses 7 having such a radius that they expand the light passing through the second lens array 5 in the second direction y into an angular range 9 of, for example, approximately 120° is provided on the entrance surface of the first substrate 10 left in the z-direction and in Figs. 10 and 11, respectively.

Furthermore, in the third embodiment the first lens array 3 with lenses 6 is provided on the entrance surface 2 of the second substrate 11 and the third lens array 13 with lenses 14 is provided on the exit surface 4 of the second substrate 11. Lenses 6, 14 have such a radius that they expand the light passing through the first and third lens arrays 3, 13 in the first direction x into an angular range 9 of about 20°, for example.

Also for such an embodiment of the diffuser device, the choice of the distance between the substrates 10, 11 together with the focal length or radius of the lenses 6 of the first lens array 3 and the focal length or radius of the lenses 14 of the third lens array 13 can influence the type and size of the distortion.

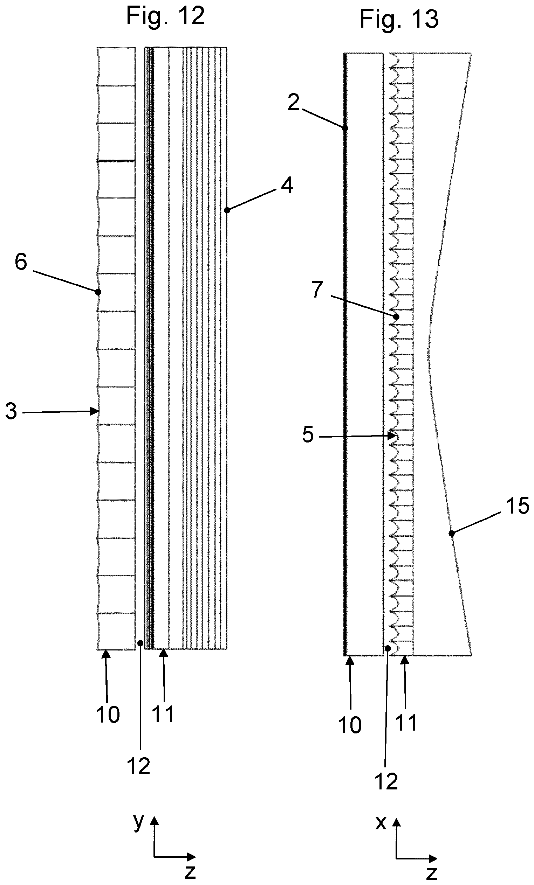

The fourth embodiment according to Fig. 12 and Fig. 13 is similar to the first embodiment according to Fig. 4 and Fig. 5, but the fourth embodiment has a large cylindrical lens 15 on the exit surface of the second substrate 11 in the z-direction and Fig. 12 and 13 on the right, respectively. The large cylindrical lens 15 is designed as a concave cylindrical lens whose cylindrical axis extends in the second direction y like that of the lenses 7 of the second lens array 5.

Instead of the large cylindrical lens 15, a collimating lens array with small cylindrical lenses may also be used (not shown).

In the design shown in Fig. 12 and Fig. 13, the large cylindrical lens 15 is integrated into the second substrate 11 or arranged on its exit surface 4. However, it is also possible to provide a (not shown) third substrate on which the large cylindrical lens 15 is formed. This third substrate is then arranged in particular in the z-direction behind the second substrate 11 or in Fig. 12 and Fig. 13 to the right of the second substrate 11.

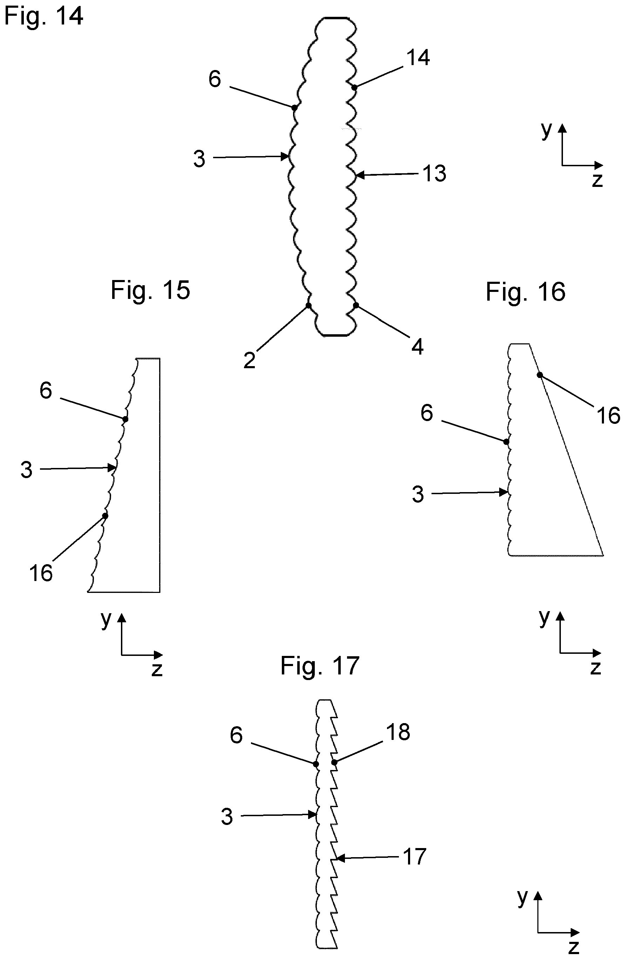

The embodiment of a diffuser device shown in Fig. 14 comprises a transparent substrate having a first lens array 3 on an entrance face 2 and a third lens array 13 on an exit face 4 opposite the entrance face 2. The lenses 6, 14 of the lens arrays 3, 13 are each designed as cylindrical lenses. The diffuser device comprises a collimator lens which is integrated into the entrance face 2 of the substrate.

The embodiment of a diffuser device shown in Fig. 15 comprises a transparent substrate having a first lens array 3 on an entrance face 2 The lenses 6 of the lens array 3 on the entrance surface 2 of the substrate are asymmetrically shaped wherein one common prism 16 is arranged on the entrance surface 2 of this substrate. In this case there is no offset between adjacent lenses 6.

The embodiment of a diffuser device shown in Fig. 16 comprises a transparent substrate having a first lens array 3 on an entrance face 2 The lenses 6 of the lens array 3 on the entrance surface 2 of the substrate are asymmetrically shaped wherein one common prism 16 is arranged on the exit surface 4 of this substrate. In this case the lenses 6 have the same SAG values at the left and right lens aperture positions.

The embodiment of a diffuser device shown in Fig. 17 comprises a transparent substrate having a first lens array 3 on an entrance face 2 The lenses 6 of the lens array 3 on the entrance surface 2 of the substrate are asymmetrically shaped wherein an array 17 of prisms 18 is arranged on the exit surface 4 of this substrate. In this case the lenses 6 have the same SAG values at the left and right lens aperture positions.

## Claims

1. Diffuser device comprising a first lens array (3) having a plurality of cylindrical lenses (6) and a second lens array (5) having a plurality of cylindrical lenses (7) through which light passes successively during operation of the diffuser device, wherein the lenses (6) of the first lens array (3) have cylinder axes extending in a first direction (x) and the lenses (7) of the second lens array (5) have cylinder axes extending in a second direction (y) perpendicular to the first direction (x), the diffuser device comprises a first transparent substrate (10) having an entrance surface (2) and an exit surface (4) and a second transparent substrate (11) having an entrance surface (2) and an exit surface (4), wherein the first lens array (3) is disposed on the first substrate (10) and the second lens array (5) is disposed on the second substrate (11), or wherein the second lens array (5) is disposed on the first substrate (10) and the first lens array (3) is disposed on the second substrate (11), and wherein the first substrate (10) and the second substrate (11) are spaced apart from one another, in particular an air gap (12) being arranged between the first substrate (10) and the second substrate (11), **characterized in that** the lenses (6) of the first lens array (3) and/or the lenses (7) of the second lens array (5) are aspherical, so that they deviate from the shape of a circular cylinder, wherein the lenses (7) of the second lens array (5) have a radius such that the light passing through the second lens array (5) is widened in the first direction (x) into an angular range (9) of more than 100°.

2. Diffuser device according to claim 1, **characterized in that** the lenses (6) of the first lens array (3) are arranged side by side in the second direction (y) and the lenses (7) of the second lens array (5) are arranged side by side in the first direction (x).

3. Diffuser device according to one of claims 1 or 2, **characterized in that** the first lens array (3) is arranged on the entrance surface (2) or on the exit surface (4) of the first substrate (10) or of the second substrate (11) or **characterized in that** the second lens array (5) is arranged on the entrance surface (2) or on the exit surface (4) of the first substrate (10) or of the second substrate (11).

4. Diffuser device according to one of claims 1 to 3, **characterized in that** the diffuser device comprises a third lens array (13), and/or a fourth lens array, which is or are also arranged on the first substrate (10) and/or the second substrate (11).

5. Diffuser device according to any of claims 1 to 4, **characterized in that** the diffuser device comprises a lens (15) arranged on the first substrate (10) and/or on the second substrate (11), in particular on its exit surface (4), or arranged on a separate third substrate.

6. Diffuser device according to any of claims 1 to 5, **characterized in that** the lenses (6) of the first lens array (3) and/or the lenses (7) of the second lens array (5) are refractive or diffractive or holographic lenses.

7. Diffuser device according to one of claims 1 to 6, **characterized in that** the lenses (6) of the first lens array (3) and/or the lenses (7) of the second lens array (5) are arranged regularly or irregularly.

8. Diffuser device according to one of claims 1 to 7, **characterized in that** the lenses (6) of the first lens array (3) and/or the lenses (7) of the second lens array (5) are asymmetrically shaped, in particular in such a way that between the lenses there is partly a step-like offset.

9. Diffuser device according to claim 8, **characterized in that** the lenses of a lens array on the entrance surface (2) of one of the substrates (10, 11) are asymmetrically shaped, wherein prisms (18) or one common prism (16) are arranged on the exit surface (4) of this substrate (10,11,), or **characterized in that** the lenses of a lens array on the entrance surface (2) of one of the substrates (10, 11) are symmetrically shaped, wherein the lenses of a lens array on the exit surface (4) of this substrate (10,11,) are asymmetrically shaped.

10. Diffuser device according to one of claims 8 or 9, **characterized in that** the lenses (6) of a lens array (3) on the entrance surface (2) of one of the substrates (10, 11) are asymmetrically shaped, wherein one common prism (16) is arranged on the entrance surface (2) of this substrate (10,11,).

11. Diffuser device according to one of claims 1 to 10, **characterized in that** the center distances of the lenses (6) of the first lens array (3) are different from the center distances the lenses (7) of the second lens array (5), in particular wherein the center distances of the lenses (6) of the first lens array (3) are larger than the center distances of the lenses (7) of the second lens array (5).

12. Diffuser device according to one of claims 1 to 11, **characterized in that** the lenses (6) of the first lens array (3) have a radius such that the light passing through the first lens array (3) is widened in the second direction (y) into an angular range (8) of more than 5°, in particular into an angular range (8) of more than 10°, preferably into an angular range (8) of more than 15°, for example into an angular range (8) of approximately 20°, and/or **in that** the lenses (7) of the second lens array (5) have a radius such that the light passing through the second lens array (5) is widened in the first direction (x) into an angular range (9) of approximately 120°.

13. Distance measuring device comprising a light source and a diffuser device for widening the light emanating from the light source, **characterized in that** the diffuser device is a diffuser device according to any one of claims 1 to 12.

14. LIDAR device comprising a light source and a diffuser device for widening the light emanating from the light source, **characterized in that** the diffuser device is a diffuser device according to any one of claims 1 to 12.

## Patentansprüche

1. Diffusorvorrichtung, die eine erste Linsenanordnung (3), die eine Vielzahl von Zylinderlinsen (6) aufweist, und eine zweite Linsenanordnung (5) umfasst, die eine Vielzahl von Zylinderlinsen (7) aufweist, durch die während des Betriebs der Diffusorvorrichtung nacheinander Licht hindurchtritt, wobei die Linsen (6) der ersten Linsenanordnung (3) Zylinderachsen aufweisen, die sich in einer ersten Richtung (x) erstrecken, und die Linsen (7) der zweiten Linsenanordnung (5) Zylinderachsen aufweisen, die sich in einer zweiten Richtung (y) erstrecken, die senkrecht zur ersten Richtung (x) ist, wobei die Diffusorvorrichtung ein erstes transparentes Substrat (10) umfasst, das eine Eintrittsoberfläche (2) und eine Austrittsoberfläche (4) aufweist und, ein zweites transparentes Substrat (11) aufweist, das eine Eintrittsoberfläche (2) und eine Austrittsoberfläche (4) aufweist, wobei die erste Linsenanordnung (3) auf dem ersten Substrat (10) angeordnet ist und die zweite Linsenanordnung (5) auf dem zweiten Substrat (11) angeordnet ist, oder wobei die zweite Linsenanordnung (5) auf dem ersten Substrat (10) angeordnet ist und die erste Linsenanordnung (3) auf dem zweiten Substrat (11) angeordnet ist, und wobei das erste Substrat (10) und das zweite Substrat (11) voneinander beabstandet sind, wobei insbesondere zwischen dem ersten Substrat (10) und dem zweiten Substrat (11) ein Luftspalt (12) eingerichtet ist, **dadurch gekennzeichnet, dass** die Linsen (6) der ersten Linsenanordnung (3) und/oder die Linsen (7) der zweiten Linsenanordnung (5) asphärisch sind, sodass sie von der Form eines Kreiszylinders abweichen, wobei die Linsen (7) der zweiten Linsenanordnung (5) einen Radius aufweisen, sodass das Licht, das durch die zweite Linsenanordnung (5) hindurchtritt, in der ersten Richtung (x) in einen Winkelbereich (9) von mehr als 100° aufgeweitet wird.

2. Diffusorvorrichtung nach Anspruch 1, **dadurch gekennzeichnet, dass** die Linsen (6) der ersten Linsenanordnung (3) in der zweiten Richtung (y) nebeneinander eingerichtet sind und die Linsen (7) der zweiten Linsenanordnung (5) in der ersten Richtung (x) nebeneinander eingerichtet sind.

3. Diffusorvorrichtung nach einem der Ansprüche 1 oder 2, **dadurch gekennzeichnet, dass** die erste Linsenanordnung (3) auf der Eintrittsoberfläche (2) oder auf der Austrittsoberfläche (4) des ersten Substrats (10) oder des zweiten Substrats (11) eingerichtet ist oder **dadurch gekennzeichnet, dass** die zweite Linsenanordnung (5) auf der Eintrittsoberfläche (2) oder auf der Austrittsoberfläche (4) des ersten Substrats (10) oder des zweiten Substrats (11) eingerichtet ist.

4. Diffusorvorrichtung nach einem der Ansprüche 1 bis 3, **dadurch gekennzeichnet, dass** die Diffusorvorrichtung eine dritte Linsenanordnung (13) umfasst, und/oder eine vierte Linsenanordnung, die ebenfalls auf dem ersten Substrat (10) und/oder dem zweiten Substrat (11) eingerichtet ist/sind.

5. Diffusorvorrichtung nach einem der Ansprüche 1 bis 4, **dadurch gekennzeichnet, dass** die Diffusorvorrichtung eine Linse (15) umfasst, die auf dem ersten Substrat (10) und/oder auf dem zweiten Substrat (11), insbesondere auf dessen Austrittsoberfläche (4) eingerichtet ist, oder auf einem separaten dritten Substrat eingerichtet ist.

6. Diffusorvorrichtung nach einem der Ansprüche 1 bis 5, **dadurch gekennzeichnet, dass** die Linsen (6) der ersten Linsenanordnung (3) und/oder die Linsen (7) der zweiten Linsenanordnung (5) refraktive oder diffraktive oder holographische Linsen sind.

7. Diffusorvorrichtung nach einem der Ansprüche 1 bis 6, **dadurch gekennzeichnet, dass** die Linsen (6) der ersten Linsenanordnung (3) und/oder die Linsen (7) der zweiten Linsenanordnung (5) regelmäßig oder unregelmäßig eingerichtet sind.

8. Diffusorvorrichtung nach einem der Ansprüche 1 bis 7, **dadurch gekennzeichnet, dass** die Linsen (6) der ersten Linsenanordnung (3) und/oder die Linsen (7) der zweiten Linsenanordnung (5) asymmetrisch, insbesondere derart geformt sind, dass zwischen den Linsen teilweise ein stufenförmiger Versatz besteht.

9. Diffusorvorrichtung nach Anspruch 8, **dadurch gekennzeichnet, dass** die Linsen einer Linsenanordnungs auf der Eintrittsoberfläche (2) eines der Substrate (10, 11) asymmetrisch geformt sind, wobei Prismen (18) oder ein gemeinsames Prisma (16) auf der Austrittsoberfläche (4) dieses Substrats (10,11,) eingerichtet sind, oder **dadurch gekennzeichnet, dass** die Linsen einer Linsenanordnung auf der Eintrittsoberfläche (2) eines der Substrate (10, 11) symmetrisch geformt sind, wobei die Linsen einer Linsenanordnung auf der Austrittsoberfläche (4) dieses Substrats (10,11,) asymmetrisch geformt sind.

10. Diffusorvorrichtung nach einem der Ansprüche 8 oder 9, **dadurch gekennzeichnet, dass** die Linsen (6) einer Linsenanordnung (3) auf der Eintrittsoberfläche (2) eines der Substrate (10, 11) asymmetrisch geformt sind, wobei ein gemeinsames Prisma (16) auf der Eintrittsoberfläche (2) dieses Substrats (10,11,) eingerichtet ist.

11. Diffusorvorrichtung nach einem der Ansprüche 1 bis 10, **dadurch gekennzeichnet, dass** sich die Achsabstände der Linsen (6) der ersten Linsenanordnung (3) von den Achsabständen der Linsen (7) der zweiten Linsenanordnung (5) unterscheiden, wobei die Achsabstände der Linsen (6) der ersten Linsenanordnung (3) insbesondere größer sind als die Achsabstände der Linsen (7) der zweiten Linsenanordnung (5).

12. Diffusorvorrichtung nach einem der Ansprüche 1 bis 11, **dadurch gekennzeichnet, dass** die Linsen (6) der ersten Linsenanordnung (3) einen Radius aufweisen, sodass das durch die erste Linsenanordnung (3) hindurchtretende Licht in der zweiten Richtung (y) in einen Winkelbereich (8) von mehr als 5°, insbesondere in einen Winkelbereich (8) von mehr als 10°, vorzugsweise in einen Winkelbereich (8) von mehr als 15°, beispielsweise in einen Winkelbereich (8) von etwa 20° aufgeweitet wird, und/oder dadurch, dass die Linsen (7) der zweiten Linsenanordnung (5) einen Radius aufweisen, sodass das durch die zweite Linsenanordnung (5) hindurchtretende Licht in der ersten Richtung (x) in einen Winkelbereich (9) von annähernd 120° aufgeweitet wird.

13. Entfernungsmessvorrichtung, umfassend eine Lichtquelle und eine Diffusorvorrichtung zur Aufweitung des von der Lichtquelle ausgehenden Lichts, **dadurch gekennzeichnet, dass** die Diffusorvorrichtung eine Diffusorvorrichtung nach einem der Ansprüche 1 bis 12 ist.

14. LIDAR-Vorrichtung umfassend eine Lichtquelle und eine Diffusorvorrichtung zur Aufweitung des von der Lichtquelle ausgehenden Lichts, **dadurch gekennzeichnet, dass** die Diffusorvorrichtung eine Diffusorvorrichtung nach einem der Ansprüche 1 bis 12 ist.

## Revendications

1. Dispositif diffuseur comprenant un premier réseau de lentilles (3) présentant une pluralité de lentilles cylindriques (6) et un deuxième réseau de lentilles (5) présentant une pluralité de lentilles cylindriques (7) à travers lesquelles de la lumière passe successivement pendant le fonctionnement du dispositif diffuseur, dans lequel les lentilles (6) du premier réseau de lentilles (3) présentent des axes de cylindre s'étendant dans une première direction (x) et les lentilles (7) du deuxième réseau de lentilles (5) présentent des axes de cylindre s'étendant dans une seconde direction (y) perpendiculaire à la première direction (x), le dispositif diffuseur comprend un premier substrat transparent (10) présentant une surface d'entrée (2) et une surface de sortie (4) et un second substrat transparent (11) présentant une surface d'entrée (2) et une surface de sortie (4), dans lequel le premier réseau de lentilles (3) est disposé sur le premier substrat (10) et le deuxième réseau de lentilles (5) est disposé sur le deuxième substrat (11), ou dans lequel le deuxième réseau de lentilles (5) est disposé sur le premier substrat (10) et le premier réseau de lentilles (3) est disposé sur le deuxième substrat (11), et dans lequel le premier substrat (10) et le deuxième substrat (11) sont espacés l'un de l'autre, en particulier un entrefer (12) étant agencé entre le premier substrat (10) et le deuxième substrat (11), **caractérisé en ce que** les lentilles (6) du premier réseau de lentilles (3) et/ou les lentilles (7) du deuxième réseau de lentilles (5) sont asphériques de telle sorte qu'elles s'écartent de la forme d'un cylindre circulaire, dans lequel les lentilles (7) du deuxième réseau de lentilles (5) présentent un rayon de telle sorte que la lumière passant à travers le deuxième réseau de lentilles (5) soit élargie dans la première direction (x) dans une plage angulaire (9) de plus de 100°

2. Dispositif diffuseur selon la revendication 1, **caractérisé en ce que** les lentilles (6) du premier réseau de lentilles (3) sont agencées côte à côte dans la seconde direction (y) et les lentilles (7) du deuxième réseau de lentilles (5) sont agencées côte à côte dans la première direction (x).

3. Dispositif diffuseur selon l'une des revendications 1 ou 2, **caractérisé en ce que** le premier réseau de lentilles (3) est agencé sur la surface d'entrée (2) ou sur la surface de sortie (4) du premier substrat (10) ou du deuxième substrat (11) ou **caractérisé en ce que** le deuxième réseau de lentilles (5) est agencé sur la surface d'entrée (2) ou sur la surface de sortie (4) du premier substrat (10) ou du deuxième substrat (11).

4. Dispositif diffuseur selon l'une des revendications 1 à 3, **caractérisé en ce que** le dispositif diffuseur comprend un troisième réseau de lentilles (13) et/ou un quatrième réseau de lentilles, qui est ou sont également agencés sur le premier substrat (10) et/ou le deuxième substrat (11).

5. Dispositif diffuseur selon l'une quelconque des revendications 1 à 4, **caractérisé en ce que** le dispositif diffuseur comprend une lentille (15) agencée sur le premier substrat (10) et/ou sur le deuxième substrat (11), en particulier sur sa surface de sortie (4), ou agencé sur un troisième substrat distinct.

6. Dispositif diffuseur selon l'une quelconque des revendications 1 à 5, **caractérisé en ce que** les lentilles (6) du premier réseau de lentilles (3) et/ou les lentilles (7) du deuxième réseau de lentilles (5) sont des lentilles réfractives ou diffractives ou holographiques.

7. Dispositif diffuseur selon l'une des revendications 1 à 6, **caractérisé en ce que** les lentilles (6) du premier réseau de lentilles (3) et/ou les lentilles (7) du deuxième réseau de lentilles (5) sont agencées de manière régulière ou irrégulière.

8. Dispositif diffuseur selon l'une des revendications 1 à 7, **caractérisé en ce que** les lentilles (6) du premier réseau de lentilles (3) et/ou les lentilles (7) du deuxième réseau de lentilles (5) sont formées de manière asymétrique, en particulier de telle manière qu'il existe entre les lentilles un décalage en partie en escalier.

9. Dispositif diffuseur selon la revendication 8, **caractérisé en ce que** les lentilles d'un réseau de lentilles sur la surface d'entrée (2) de l'un des substrats (10, 11) sont formées de manière asymétrique, dans lequel des prismes (18) ou un prisme commun (16) sont agencés sur la surface de sortie (4) de ce substrat (10, 11), ou **caractérisé en ce que** les lentilles d'un réseau de lentilles sur la surface d'entrée (2) de l'un des substrats (10, 11) sont formées de manière symétrique, dans lequel les lentilles d'un réseau de lentilles sur la surface de sortie (4) de ce substrat (10, 11) sont formées de manière asymétrique.

10. Dispositif diffuseur selon l'une des revendications 8 ou 9, **caractérisé en ce que** les lentilles (6) d'un réseau de lentilles (3) sur la surface d'entrée (2) de l'un des substrats (10, 11) sont formées de manière asymétrique, dans lequel un prisme commun (16) est agencé sur la surface d'entrée (2) de ce substrat (10, 11).

11. Dispositif diffuseur selon l'une des revendications 1 à 10, **caractérisé en ce que** les entraxes des lentilles (6) du premier réseau de lentilles (3) sont différents des entraxes des lentilles (7) du deuxième réseau de lentilles (5), en particulier dans lequel les entraxes des lentilles (6) du premier réseau de lentilles (3) sont plus grands que les entraxes des lentilles (7) du deuxième réseau de lentilles (5).

12. Dispositif diffuseur selon l'une des revendications 1 à 11, **caractérisé en ce que** les lentilles (6) du premier réseau de lentilles (3) présentent un rayon de telle sorte que la lumière traversant le premier réseau de lentilles (3) soit élargie dans le second direction (y) dans une plage angulaire (8) supérieure à 5°, en particulier dans une plage angulaire (8) supérieure à 10°, de préférence dans une plage angulaire (8) supérieure à 15°, par exemple dans une plage angulaire (8) d'environ 20°, et/ou **en ce que** les lentilles (7) du deuxième réseau de lentilles (5) présentent un rayon de telle sorte que la lumière traversant le deuxième réseau de lentilles (5) soit élargie dans la première direction (x) dans une plage angulaire (9) d'environ 120°.

13. Dispositif de mesure de distance comprenant une source de lumière et un dispositif diffuseur pour élargir la lumière émanant de la source de lumière, **caractérisé en ce que** le dispositif diffuseur est un dispositif diffuseur selon l'une quelconque des revendications 1 à 12.

14. Dispositif LIDAR comprenant une source de lumière et un dispositif diffuseur pour élargir la lumière émanant de la source de lumière, **caractérisé en ce que** le dispositif diffuseur est un dispositif diffuseur selon l'une quelconque des revendications 1 à 12.
